# EUROPÄISCHE PATENTSCHRIFT

(11) **EP 1 847 385 B1**
(45) Veröffentlichungstag und Bekanntmachung des Hinweises auf die Patenterteilung: **07.09.2011**
(21) Anmeldenummer: 07007938.9
(22) Anmeldetag: 19.04.2007
(51) Int. Cl.: B32B 21/06, E04F 15/02

(54) **Bauplatte und Verfahren zur Herstellung einer Bauplatte**
Construction board and method for manufacturing a construction board
Panneau de construction et procédé destiné à la fabrication d'un panneau de construction

(30) Priorität: 20.04.2006 DE 102006018277
(43) Veröffentlichungstag der Anmeldung: 24.10.2007
(73) Patentinhaber: Kronotec AG, 6006 Luzern (CH)
(72) Erfinder: Bitzl, Johann, 6130 Willisau (CH); Hasch, Joachim, Dr., 10317 Berlin (DE); Grunwald, Dirk, Dr., 38108 Braunschweig (DE)
(74) Vertreter: Rehmann, Thorsten

(56) Entgegenhaltungen:
- EP-A2- 1 245 382
- US-A1- 2005 271 872

## Beschreibung

Die Erfindung betrifft eine Bauplatte mit einem Kern aus beleimten oder miteinander verpressten Holzspänen oder Holzfasern und zwei den Kern zur Oberseite und zur Unterseite abdeckenden Deckschichten und ein Verfahren zur Herstellung einer Bauplatte.

Eine solche Bauplatte ist beispielsweise aus der DE 93 00 109 U1 bekannt.

Bauplatten bestehen häufig aus einem Kernmaterial und darüber angeordneten Deckschichten eines Werkstoffes. Kern- und Deckschichtmaterial können dabei aus kleinen Partikeln bestehen, die durch Zugabe eines Bindemittels zu großformatigen Platten verpresst werden können. Neben der Anwendung im Bauwesen können derartige Platten beispielsweise auch in der Möbel- und Fußbodenindustrie oder für die Herstellung von Versandkisten eingesetzt werden. Wichtig für den Einsatz dieser Platten in den genannten Einsatzbereichen ist, dass die Platten eine gleichmäßig geschlossene Oberfläche aufweisen, damit diese sich für die Beschichtung mit verschiedensten Oberflächenwerkstoffen eignen, um als dekoratives Element oder auch als Schalungsplatte eingesetzt werden zu können.

Neben den optischen Gestaltungsmöglichkeiten, die eine ebene Oberfläche der Bauplatten bietet, gibt es noch weitere Anforderungen, denen Bauplatten gerecht werden müssen. Hierzu zählen insbesondere Feuchtebeständigkeit und gute Festigkeitseigenschaften. Werden Bauplatten im Außenbereich eingesetzt, so ist es wichtig, dass sich diese Platten bei Feuchtebeanspruchung hinsichtlich ihrer Festigkeitseigenschaften möglichst wenig verändern und möglichst wenig quellen, um die Gebrauchstauglichkeit, die für Außenanwendungen, z. B. für die Gestaltung von Terrassen, Gartenhäusern oder Dächern bzw. den Einsatz als Schalungsplatte notwendig ist, sicherzustellen.

Zudem sind die Herstellungskosten für Bauplatten, die im Außenbereich eingesetzt werden, aufgrund der verwendeten feuchtbeständigen Leime bzw. der aufwändigen Beschichtung solcher Platten kostenintensiv in der Herstellung.

Aus der DE 299 00 621 U1 ist eine Leichtbaustoff in Verbundbauweise bekannt, der zu einem großen Teil aus in der Natur vorkommenden Materialien besteht. Ein aus geschäumtem Kork bestehender Formkörper wird hierzu zumindest auf einer Seite mit einer polyurethangetränkten Abdeckung aus Naturfasern versehen, wobei als Naturfasern auch Holzfasern in Betracht kommen können.

Aus der EP 1 245 382 A2 ist ein Laminatpaneel für Fußböden bekannt, das aus einem Kern aus Holzwerkstoff besteht, auf dessen Oberseite eine Dekorschicht aus Papier und einem die Dekorschicht abdeckenden Overlay aus Melaminharz aufgebracht sind. Auf der Unterseite des Kerns ist als Gegenzug eine Unterschicht aus Papier aufgebracht. Diese Platte ist nicht feuchtebeständig und kann nur im Innenbereich eingesetzt werden.

Gerade für den Einsatz im Außenbereich sind Holz-Kunststoff-Verbundwerkstoffe (WPC = Wood Plastic Composites) bekannt geworden, bei denen in einem vorwiegend aus Kunststoff bestehenden Matrixmaterial Holzpartikel bzw. Fasern und bestimmte Additive eingelagert sind (vgl. Teischinger et. al., Holztechnologie 46 (2005) 2, Carl Hanser Verlag, München, S. 30 - 34). Solche Werkstoffe werden in der Regel im Extrusionsprozess oder im Spritzgussprozess, oder auch mittels anderen Formgebungsverfahren hergestellt und weisen eine gute Feuchtebeständigkeit auf. Durch die Beibringung von Holz zum Kunststoff kann zum einen eine Verbesserung der technischen Eigenschaften und zum anderen auch eine Kostenreduzierung erreicht werden. Durch die Zugabe von Holz zur Kunststofffraktion kann der Rohstoffmix verbilligt werden, da die Kosten von Holz ca. um das 10-fache geringer sind als die Kosten für Kunststoffe, zum Beispiel Polyolefine, die als Matrixmaterial genutzt werden.

WPC's bestehen aus einer Matrix aus Kunststoff mit darin eingelagerten Holzpartikeln. Da WPC's in der Regel auf Extrudern hergestellt werden, ist die Extrusionsgeschwindigkeit im Vergleich zu anderen Plattenherstellungsverfahren, wie z. B. auf kontinuierlichen oder diskontinuierlichen Pressen, vergleichsweise langsam, so dass die Herstellung von großformatigen Bauplatten aus WPC-Material beispielsweise im Extrusionsverfahren nicht wirtschaftlich ist.

Die US 2005/0271872 A1 offenbart einen Block aus WPC, der zwei unterschiedliche Farben aufweist, indem der Kunststoff anders eingefärbt ist als die Holzfasern, die zusammengemischt sind.

Ausgehend von dieser Problemstellung liegt der Erfindung die Aufgabe zugrunde, die eingangs erläuterte Bauplatte dahingehend zu verbessern, dass sie eine erhöhte Feuchtebeständigkeit aufweist und sich einfach und kostengünstig produzieren lässt.

Zur Lösung der Aufgabe zeichnet sich eine gattungsgemäße Bauplatte dadurch aus, dass der Kern mehrlagig gestreut ist, die Deckschichten aus gestreutem WPC-Material bestehen und die Deckschichten und der Kern so miteinander unter erhöhter Temperatureinwirkung verpresst sind, dass die thermoplastischen Kunststoffe der WPC-Schichten mit den Holzbestandteilen verbunden sind.

Damit können Bauplatten erzeugt werden, die trotz eines Kerns aus Holzwerkstoff aufgrund der Deckschichten aus WPC-Material gute Feuchteeigenschaften aufweisen und sich zum Beispiel für die Herstellung von Fensterbänken, Gartenmöbeln oder Schalungsplatten für den Außenbereich eignen. Neben der Verwendung der erfindungsgemäßen Bauplatte im Außenbereich kann die Platte genau so gut im Innenbereich zum Beispiel als Kernmaterial für Wand, Boden- oder Deckenpaneele eingesetzt werden. Dazu kann die erfindungsgemäße Bauplatte mit den verschiedensten Beschichtungen versehen werden.

Als Kern der Bauplatte können herkömmliche Holzwerkstoffplatten, beispielsweise OSB-Platten, Spanplatten oder Faserplatten, insbesondere MDF- oder HDF-Platten eingesetzt werden. Werden Bauplatten mit hohen Festigkeitseigenschaften, z. B. Biegefestigkeitseigenschaften gewünscht, so empfiehlt es sich, OSB-Platten als Kern der Bauplatte einzusetzen. Soll aus der Bauplatte beispielsweise ein Fußbodenpaneel hergestellt werden, so empfiehlt es sich, einen Kern aus einer HDF-Platte zu verwenden und die Bauplatte dann mit entsprechenden Beschichtungen zu versehen.

Zur Homogenisierung der Platteneigenschaften der Kernplatte sowie zur Verbesserung der Festigkeitseigenschaften kann der Kern der Bauplatte mehrlagig gestreut sein. Insbesondere bei der Verwendung von OSB-Strands ist es vorteilhaft, das Material der ersten Schicht in Produktionsrichtung zu orientieren. Die Streuung der nächsten Schicht, der so genannten Mittelschicht, erfolgt unter einem Winkel von 90° zur Produktionsrichtung. Auf diese Schicht kann gegebenenfalls eine dritte Schicht gestreut werden, deren Späne oder Strands ebenfalls in einem 90° Winkel zur Produktionsrichtung ausgerichtet sind. Auf die letzte quer (90°) zur Produktionsrichtung ausgerichtete Strand- bzw. Spanschicht erfolgt der Auftrag einer weiteren Schicht, einer Strand- oder Spandeckschicht, aus Kernmaterial, wobei das Material in Produktionsrichtung orientiert wird. Der auf diese Weise hergestellte Kern weist auf seiner Ober- und Unterseite eine abdeckende Deckschicht aus WPC-Material auf. Die WPC-Schichten und die Kernschichten werden im selben Pressvorgang in einer herkömmlichen Holzwerkstoff-Presseinrichtung zur erfindungsgemäßen Bauplatte verpresst.

Es ist ebenfalls möglich, dass die Kernlage der Bauplatte nur aus einer Schicht besteht. Hierdurch kann die Herstellung der Bauplatte weiter vereinfacht werden.

Es hat sich gezeigt, dass bei der Herstellung der Bauplatte ein Feuchtegehalt des Holzanteils von 0,5 bis 12 % und ein Feuchtegehalt des WPC-Materials von 0,5 bis 5 % vorteilhaft ist.

Die Abmessungen der Holzbestandteile im Holzwerkstoffkern der Bauplatte betragen z. B. bei einem Spanplattenkern für die Deckschichtspäne <0,2 mm (Länge) und für die Mittelschichtspäne >0,2 mm bis <0,5 mm (Länge). Bei einem Faserplattenkern ist eine Faserlänge von 0,8 bis 4 mm vorteilhaft. Bei einem OSB-Kern können die Deckschicht- und Mittelschichtstrands eine Länge von 50 bis 250 mm, eine Breite von 10 bis 30 mm und eine Dicke von 0,3 bis 1,5 mm aufweisen, um ausreichende Festigkeitseigenschaften der Bauplatte zu ermöglichen. Als Rohstoffe für den Kern aus Holzwerkstoff und für den Holzanteil der WPC-Schichten können Nadelhölzer, Laubhölzer, Flachs, Hanf und Stroh eingesetzt werden.

Es hat sich gezeigt, dass der Kunststoffanteil in den Deckschichten aus WPC-Material vorteilhafterweise 20 bis 80 % beträgt. Bei diesen Kunststoffanteilen kann zum einen eine gute Feuchtebeständigkeit des WPC-Materials erreicht werden und zum anderen eine kostengünstige Rohstoffbasis für die Bauplatte erzielt werden. Der Kunststoff kann beispielsweise als Kunststoffgranulat zugegeben werden.

Die erfindungsgemäße Bauplatte weist eine Rohdichte größer als 500 kg/m³, insbesondere eine Rohdichte zwischen 500 und 700 kg/m³ auf. Bauplatten in diesem Rohdichtebereich lassen sich aufgrund des geringen Gewichts leicht verarbeiten.

Vorteilhafterweise kann zwischen den Deckschichten des WPC-Materials und in dem Kern der Bauplatte ein Vlies eingebracht sein. Das Vlies kann einen Klebstoff oder einen Haftvermittler enthalten, um die Verbindungsfestigkeit zwischen WPC-Deckschichtmaterial und Kernmaterial aus Holzwerkstoff zu verbessern. Außerdem können durch das Einlegen eines Vliesmaterials die Festigkeitseigenschaften der Bauplatte verbessert werden. Je nach Art des verwendeten Vliesmaterials können die Festigkeitseigenschaften der Bauplatte verändert werden.

Um statischen Aufladungen des WPC-Deckschichtmaterials entgegen zu wirken, ist es vorteilhaft, dem WPC-Material elektrisch leitfähige Kunststoffe beizugeben. Vorteilhafterweise können hierfür Kunststoffe auf Basis von Polyanillin oder Polypyrrol eingesetzt werden.

Das Verfahren zur Herstellung einer Bauplatte zeichnet sich durch folgende Schritte aus:
- Streuen einer unteren Deckschicht aus WPC,
- Streuen einer oder mehrere Kernschichten aus beleimten Holzwerkstoffschnitzeln oder Fasern auf die WPC-Schicht,
- Streuen der oberen Deckschicht aus WPC auf die letzte Kernschicht,
- Verpressen des gestreuten Kuchens unter erhöhter Temperatureinwirkung zu einer Platte und
- Abkühlen der Platten unter Druckeinwirkung.

Die Herstellung der erfindungsgemäßen Bauplatte orientiert sich an der klassischen Holzwerkstoff-Herstellung. Die Holzwerkstoffschnitzel oder -fasern werden beispielsweise in Zerspanern oder Refinern hergestellt, anschließend getrocknet und mittels einer Beleimeinrichtung mit Klebstoff versehen. Als WPC-Material kommen Holzfaser-Kunststoff-Mischungen mit einem Anteil von 20 bis 80 % Kunststoff zum Einsatz. Die Kunststoffe werden aus der Gruppe der Thermosplaste ausgewählt.

Bei der Herstellung erfolgt zuerst die Streuung einer unteren Deckschicht aus WPC-Material mit einem ersten Streukopf. Auf diese untere WPC-Schicht erfolgt dann der Auftrag einer oder mehrerer Kernschichten aus beleimten Holzwerkstoffschnitzeln oder Fasern mit einem oder mehreren weiteren Streuköpfen. Auf die letzte Kernschicht wird dann die abdeckende Deckschicht aus WPC-Material gestreut. Der fertig gestreute Kuchen wird in eine Holzwerkstoffpresse eingefahren und unter erhöhter Temperatur- und Druckeinwirkung zu einer Platte verpresst. Unter Einwirkung von Temperatur und Druck härten die Klebstoffe der Kernschicht aus und die thermoplastischen Kunststoffe der WPC-Schichten verbinden sich mit den Holzbestandteilen der Bauplatte. Hierzu können herkömmliche kontinuierliche oder diskontinuierliche Pressen verwendet werden. Um ein Anhaften des WPC-Materials an den Stahlbändern oder Pressblechen der Presseinrichtung zu verhindern, kann auf das WPC-Material und/oder die Pressbleche bzw. Stahlbänder ein Trennmittel aufgebracht werden. Um die thermoplastischen Decklagen aus WPC-Material nach dem Verpressen wieder zu verfestigen, ist eine Rückkühlung der Platten notwendig. Die Abkühlung der Platten erfolgt dazu unter Druckeinwirkung.

Zur Rückkühlung können kontinuierliche Pressen mit einer integrierten Kühlzone verwendet werden oder die Rückkühlung der Platten kann nach der Presse durch leistungsstarke Ventilatoren erfolgen. Es ist ebenfalls möglich, die letzten Heizkreise der kontinuierlichen Presse nicht zu betreiben bzw. durch aktives Kühlen zur Rückkühlung der Platten einzusetzen. Es ist zudem möglich, die Platten in einer speziellen Kühlpresse zu kühlen, die der Heißpresse nachgeordnet ist, wobei diese Presse sowohl kontinuierlich als auch diskontinuierlich betrieben werden kann.

Der Kunststoffanteil des WPC-Materials kann aus Polypropylen (PP), Polyethylen (PE), Polyethylenterephthalat (PET) einzeln oder in Kombination miteinander bestehen. Gegebenenfalls können diese Kunststoffe auch mit Haftvermittlern auf Basis von Maleinsäureanhydrid, PMDI oder Silanen modifiziert werden.

Als Klebstoffe für den Holzwerkstoffkern der Bauplatte können Harnstoffformaldehyd-(UF), Melamin-Harnstoffformaldehyd- (MUF), Phenolformaldehyd- (PF), Melamin-Harnstoff-Phenolformaldehyd- (MUPF), PMDI-, Silan-, Polyethylenamin-(PEI), Polyvinylamin- (PVAm) oder Protein-Klebstoffe verwendet werden. Gegebenenfalls können auch diese Klebstoffe mit Haftvermittlern auf Basis von Maleinsäureandhydrid, PMDI oder Silanen modifiziert werden.

Anhand einer Zeichnung soll ein Ausführungsbeispiel der Erfindung näher erläutert werden. Es zeigt:
- Figur 1: ein Verfahrensschema zur Herstellung der Bauplatte mit Holzwerkstoffkern und Deckschichten aus WPC-Material und
- Figur 2: ein Rohdichteprofil der erfindungsgemäßen Bauplatte.

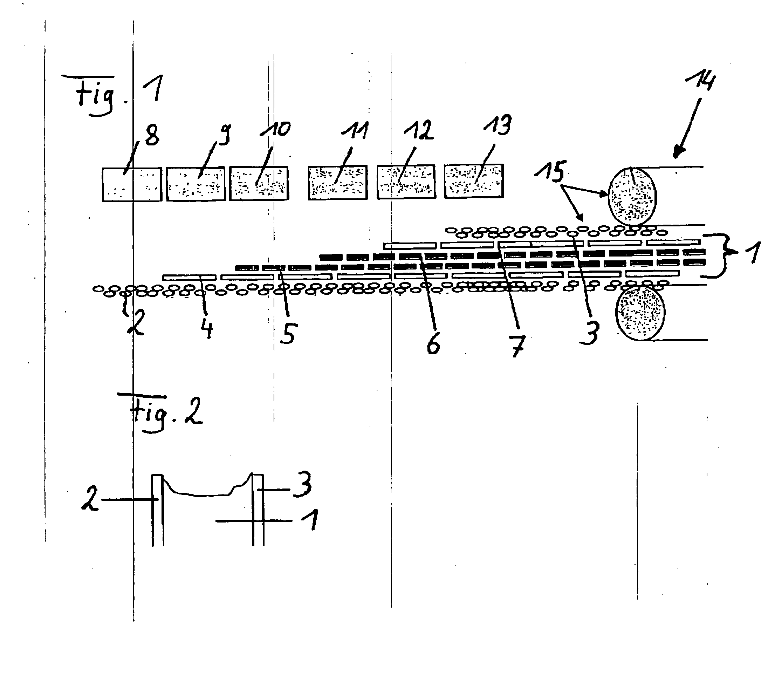

Figur 1 zeigt ein Schema zur Herstellung der erfindungsgemäßen Bauplatte, bestehend aus zwei Deckschichten 2, 3 aus WPC-Material und einem dazwischen angeordneten Kern 1 aus Holzwerkstoff. Der Kern 1 besteht aus einer mehrlagigen Holzwerkstoffplatte, in diesem Fall aus einer OSB-Platte aus mehreren Lagen rechtwinklig zueinander ausgerichteter Strands. Zur Herstellung der Bauplatte wird mit einem ersten Streukopf 8 das WPC-Material, das aus einer Holzfaser-Kunststoff-Mischung mit einem thermoplastischen Kunststoffanteil von 80 % besteht, auf das Formband aufgestreut. Hierauf wird mit einem zweiten Streukopf 9 eine aus Strands bestehende erste Schicht 4 des Kerns 1 aus Holzwerkstoff gestreut. Die Strands der Schicht 4 sind in Produktionsrichtung orientiert. Mittels eines dritten Streukopfes 10 wird das Mittelschichtmaterial 5 des Kerns 1 in einem Winkel von 90° zur Produktionsrichtung auf die Schicht 4 aufgestreut. Auf die erste Mittelschicht 5 des Kerns 1 erfolgt der Auftrag einer zweiten Mittelschicht 6 mittels des Streukopfes 11. Auch hier sind die Strands in einem Winkel von 90° zur Produktionsrichtung orientiert. Auf die Mittelschicht 6 des Kerns 1 erfolgt die Streuung der Deckschicht 7 des Kerns 1 mittels des Streukopfes 12. Die Ausrichtung der OSB-Strands in der Deckschicht 7 des Kerns 1 erfolgt parallel zur Produktionsrichtung. Zuletzt wird die Deckschicht 7 des Kerns 1 mit einer abschließenden Deckschicht 3 aus WPC-Material abgedeckt. Die WPC-Deckschicht 3 wird mittels eines Streukopfes 13 auf die Deckschicht 7 aufgestreut. Die WPC-Schichten 2, 3 enthalten einen Kunststoffanteil von 80 %. Die Feuchte der Matte, die aus den WPC-Deckschichten 2, 3 und der Holzwerkstoffkernschicht 1 besteht, beträgt für die WPC-Schichten 2, 3 ca. 5 % und für den Kern 1 aus OSB ca. 12 %.

Die Strands des Kerns 1 aus OSB bestehen aus Nadelholz und haben eine Länge von 50 - 250 mm, eine Breite von 10 - 30 mm und eine Dicke 0,3 bis 1,5 mm.

Das WPC-Material in den Deckschichten 2, 3 besteht aus einer Mischung aus Polypropylen, Polyethylen und Polyethylenterephthalat, die mit Haftvermittlern auf Basis von Maleinsäureanhydrid modifiziert wurden. Die Kernschicht 1 der Bauplatte ist mit einem PMDI-Harz beleimt, das ebenfalls mit einem Haftvermittler auf Basis von Maleinsäureanhydrid modifiziert wurde.

Um Anhaftungen an den Stahlbändern der Presseinrichtung 14 zu verhindern, ist auf die Deckschichten 2, 3 aus WPC-Material ein Trennmittel 15 aufgebracht. Der gestreute Kuchen, bestehend aus Deckschichten 2, 3 aus WPC-Material und einem Kern 1 aus Holzwerkstoff wird in der Presseinrichtung 14 unter erhöhter Temperatur- und Druckeinwirkung zu einer Bauplatte verpresst. Durch die Temperatureinwirkung schmilzt der thermoplastische Kunststoff des WPC-Materials auf und verbindet sich mit den Holzfasern zu den Deckschichten 2, 3 und mit dem Kern 1. In der Presse wird ebenfalls der PMDI-Klebstoff des Kerns 1 ausgehärtet.

Um die thermoplastischen Decklagen 2, 3 nach dem Pressen zu verfestigen, werden die Platten rückgekühlt. Hierzu wird eine kontinuierliche Presse mit integrierter Kühlzone verwendet. Durch das Abkühlen der Bauplatte unter Druckeinwirkung bleibt die Platte maßgenau.

Figur 2 zeigt das Rohdichteprofil der Bauplatte, bestehend aus einem Kern 1 und Deckschichten 2, 3. Es zeigt sich, dass in den Deckschichten 2, 3 keine Rohdichteschwankungen zu erkennen sind. Dahingegen weist der Kern 1 den üblichen Rohdichteverlauf einer Holzwerkstoffplatte auf.

### Bezugszeichenliste

- 1: Kern
- 2: Deckschicht WPC
- 3: Deckschicht WPC
- 4: Untere Deckschicht Kern
- 5: Mittelschicht Kern
- 6: Mittelschicht Kern
- 7: Obere Deckschicht Kern
- 8: Streukopf
- 9: Streukopf
- 10: Streukopf
- 11: Streukopf
- 12: Streukopf
- 13: Streukopf
- 14: Presseinrichtung
- 15: Trennmittel

## Patentansprüche

1. Bauplatte mit einem Kern (1) aus beleimten und miteinander verpressten Holzspänen oder Holzfasern und zwei den Kern (1) zur Oberseite und zur Unterseite abdeckenden Deckschichten (2, 3), **dadurch gekennzeichnet, dass** der Kern (1) mehrlagig gestreut ist, die Deckschichten (2, 3) aus gestreutem WPC- (Wood-Plastic-Composite) Material bestehen und der Kern (1) und die Deckschichten (2, 3) so unter erhöhter Temperatureinwirkung miteinander verpresst sind, dass die thermoplastischen Kunststoffe der WPC-Schichten mit den Holzbestandteilen verbunden sind.

2. Bauplatte nach Anspruch 1, **dadurch gekennzeichnet, dass** der Kunststoffanteil der Deckschichten (2, 3) 20 bis 80 % beträgt.

3. Bauplatte nach Anspruch 1, **gekennzeichnet durch** eine Rohdichte > 500 kg/m³_{.}

4. Bauplatte nach Anspruch 3, **gekennzeichnet durch** eine Rohdichte zwischen 500 und 700 kg/m³.

5. Bauplatte nach Anspruch 1, **dadurch gekennzeichnet, dass** zwischen mindestens einer Deckschicht (2, 3) und dem Kern (1) ein Vlies eingebracht ist.

6. Bauplatte nach Anspruch 5, **dadurch gekennzeichnet, dass** das Vlies einen Klebstoff oder einen Haftvermittler enthält.

7. Bauplatte nach Anspruch 1, **dadurch gekennzeichnet, dass** das WPC-Material elektrisch leitfähige Kunststoffe enthält.

8. Bauplatte nach Anspruch 7, **dadurch gekennzeichnet, dass** die Kunststoffe auf Basis von Polyanillin oder Polypyrrol bestehen.

9. Verfahren zur Herstellung einer Bauplatte nach einem oder mehreren der Ansprüche 1 bis 8, **gekennzeichnet durch** folgende Schritte:
- Streuen einer unteren Deckschicht (2) aus WPC,
- Streuen einer oder mehrerer Kernschichten (4, 5, 6, 7) aus beleimten Holzwerkstoff-Schnitzeln oder Fasern auf die WPC-Schicht (2),
- Streuen der oberen Deckschicht (3) aus WPC auf die letzte Kernschicht (7),
- Verpressen des gestreuten Kuchens unter erhöhter Temperatureinwirkung zu einer Platte, so dass sich die thermoplastischen Kunststoffe der WPC-Schichten mit den Holzbestandteilen verbinden, und
- Abkühlen der Platte unter Druckeinwirkung.

10. Verfahren nach Anspruch 9, **dadurch gekennzeichnet, dass** zum Abkühlen eine kontinuierliche Presse mit einer integrierten Kühlzone verwendet wird.

11. Verfahren nach Anspruch 10, **dadurch gekennzeichnet, dass** der letzte Heizkreis der kontinuierlichen Presse aktiv gekühlt wird.

12. Verfahren nach Anspruch 9, **dadurch gekennzeichnet, dass** zum Abkühlen eine der Heißpresse nachgeordnete Kühlpresse verwendet wird.

## Claims

1. Construction board with a core (1) made of wood chips or wood fibres, which are glue-treated and pressed together, and two cover layers (2, 3) covering the core (1) at the upper side and the lower side, **characterised in that** the core (1) has a multi-layer scattering, the cover layers (2, 3) consist of scattered WPC (Wood Plastic Composite) material and the core (1) and the cover layers (2, 3) are pressed together under the action of an elevated temperature in such a way that the thermoplastic plastics materials of the WPC layers are bonded to the wood components.

2. Construction board according to claim 1, **characterised in that** the plastics material fraction of the cover layers (2, 3) is 20 to 80 %.

3. Construction board according to claim 1, **characterised by** a bulk density of > 500 kg/m³_{.}

4. Construction board according to claim 3, **characterised by** a bulk density between 500 and 700 kg/m³.

5. Construction board according to claim 1, **characterised in that** a nonwoven is introduced between at least one cover layer (2, 3) and the core (1).

6. Construction board according to claim 5, **characterised in that** the nonwoven contains an adhesive or an adhesion promoter.

7. Construction board according to claim 1, **characterised in that** the WPC material contains electrically conductive plastics materials.

8. Construction board according to claim 7, **characterised in that** the plastics materials are based on polyaniline or polypyrrole.

9. Method for producing a construction board according to any one or more of claims 1 to 8, **characterised by** the following steps:
- scattering a lower cover layer (2) made of WPC,
- scattering one or more core layers (4, 5, 6, 7) made of glue-treated wood-based material chips or fibres onto the WPC layer (2),
- scattering the upper cover layer (3) made of WPC onto the last core layer (7),
- pressing the scattered cake under the action of an elevated temperature to form a board, so the thermoplastic plastics materials of the WPC layers bond to the wood components, and
- cooling the board under the action of pressure.

10. Method according to claim 9, **characterised in that** a continuous press with an integrated cooling zone is used for cooling.

11. Method according to claim 10, **characterised in that** the last heating circuit of the continuous press is actively cooled.

12. Method according to claim 9, **characterised in that** a cooling press arranged downstream of the heating press is used for cooling.

## Revendications

1. Panneau de construction comprenant une âme (1) formée par des copeaux de bois ou fibres de bois encollés et pressés ensemble, et deux couches de recouvrement (2, 3) recouvrant l'âme (1) sur la face supérieure et la face inférieure, **caractérisé en ce que** l'âme (1) est dispersée en plusieurs couches, les couches de recouvrement (2, 3) consistent en un matériau WPC (Wood-Plastic-Composite) dispersé, et l'âme (1) et les couches de recouvrement (2, 3) sont pressées ensemble sous exposition à une température accrue, de sorte que les matières synthétiques thermoplastiques des couches de WPC soient liées aux parties constitutives en bois.

2. Panneau de construction selon la revendication 1, **caractérisé en ce que** la proportion de matière synthétique des couches de recouvrement (2, 3) va de 20 à 80%.

3. Panneau de construction selon la revendication 1, **caractérisé par** une masse volumique apparente > 500 kg/m³.

4. Panneau de construction selon la revendication 3, **caractérisé par** une masse volumique apparente entre 500 et 700 kg/m³.

5. Panneau de construction selon la revendication 1, **caractérisé en ce qu'**un non-tissé est rapporté entre au moins une couche de recouvrement (2, 3) et l'âme (1).

6. Panneau de construction selon la revendication 5, **caractérisé en ce que** le non tissé contient une colle ou un agent d'accrochage.

7. Panneau de construction selon la revendication 1, **caractérisé en ce que** le matériau WPC contient des matières synthétiques conductrices électriquement.

8. Panneau de construction selon la revendication 7, **caractérisé en ce que** les matières synthétiques sont à base de polyaniline ou de polypyrrole.

9. Procédé de fabrication d'un panneau de construction selon l'une ou plusieurs des revendications 1 à 8, **caractérisé par** les étapes suivantes :
- dispersion d'une couche de recouvrement (2) inférieure en WPC,
- dispersion sur la couche de WPC (2) d'une ou plusieurs couches d'âme (4, 5, 6, 7) en fibres ou copeaux de matériau dérivé du bois encollés,
- dispersion de la couche de recouvrement (3) supérieure en WPC sur la dernière couche d'âme (7),
- pressage du gâteau dispersé sous exposition à une température accrue pour obtenir un panneau, de sorte que les matières synthétiques thermoplastiques des couches de WPC se lient avec les parties constitutives en bois, et
- refroidissement du panneau sous exposition à une pression.

10. Procédé selon la revendication 9, **caractérisé en ce qu'**on utilise pour le refroidissement une presse continue ayant une zone de refroidissement intégrée.

11. Procédé selon la revendication 10, **caractérisé en ce que** l'on refroidit activement le dernier circuit de chauffage de la presse continue.

12. Procédé selon la revendication 9, **caractérisé en ce que** l'on utilise pour le refroidissement une presse à refroidissement en aval de la presse à chaud.
